# EUROPEAN PATENT SPECIFICATION

(11) **EP 2 028 868 B1**
(45) Date of publication and mention of the grant of the patent: **28.03.2012**
(21) Application number: 08706558.7
(22) Date of filing: 25.01.2008
(51) Int. Cl.: H04W 72/04, H04L 5/00

(54) **A METHOD FOR ASSIGNING CARRIER RESOURCES TO A MOBILE STATION AND CORRESPONDING BASE STATION**
VERFAHREN FÜR DIE ZUWEISUNG VON TRÄGERRESSOURCEN AN EINE MOBILSTATION UND BASISSTATION DAFÜR
PROCÉDÉ D'AFFECTATION DE RESSOURCES DE PORTEUSE À UNE STATION MOBILE ET STATION BASE CORRESPONDANT

(30) Priority: 02.02.2007 CN 200710006881
(43) Date of publication of application: 25.02.2009
(60) Divisional application: 11183407.3
(73) Proprietor: Huawei Technologies Co., Ltd., Shenzhen, Guangdong Province 518129 (CN)
(72) Inventor: GENG, Fenghua, Shenzhen Guangdong 518129 (CN)
(74) Representative: Lord, Michael
(86) International application number: PCT/CN2008/070181
(87) International publication number: WO 2008/095434

(56) References cited:
- EP-A- 1 231 745
- CN-A- 1 322 068
- CN-A- 1 352 845
- CN-A- 1 373 617
- US-A1- 2006 280 142
- SIEMENS NETWORKS ET AL: "Introduction of Downlink Dual Carrier - Assignment Messages" 3GPP DRAFT; GP-062480_44060DCDL_R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Sophia; 20061117, 17 November 2006 (2006-11-17), XP050017440 [retrieved on 2006-11-17]
- SIEMENS NETWORKS: "Introduction of Downlink Dual Carrier messages" 3GPP DRAFT; GP-062225_DCDL44018-760, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Sophia; 20061108, 8 November 2006 (2006-11-08), XP050017207 [retrieved on 2006-11-08]
- ERICSSON: "Dual-carrier in Downlink Principles 1 General" 3GPP DRAFT; GP-060752, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. San Jose del Cabo, Mexico; 20060419, 19 April 2006 (2006-04-19), XP050015843 [retrieved on 2006-04-19]
- SIEMENS: "Introduction of Downlink Dual Carrier - Procedures" 3GPP DRAFT; GP-062229_CR44.060-INTRODLDC_PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Sophia; 20061108, 8 November 2006 (2006-11-08), XP050017211 [retrieved on 2006-11-08]
- NOËL F: "Higher Data Rates in GSM/EDGE with Multicarrier" MASTER'S THESIS CHALMERS UNIVERSITY OF TECHNOLOGY GOTEBORG, XX, XX, 1 April 2001 (2001-04-01), pages 1-61, XP002368895

## Description

### Field of the Invention

The present invention relates to the communication technology field, and in particular, to a method and base station for assigning carriers to an MS (Mobile Station).

### Background of the Invention

With the development of science and technologies, people tend to have higher and higher requirements on mobile communication services and their quality. Therefore, the requirement for smooth evolution to the third generation (3G) mobile communication technology is put forward. The main technologies for evolution to the 3G are General Packet Radio Service (GPRS), Enhanced Data Rate for GSM Evolution (EDGE) and High Speed Circuit Switched Data (HSCSD), and the research focuses on improving the transmission rate and reducing transmission delay by using limited spectrum resources.

GPRS is a packet data switching technology introduced in the Global System for Mobile Communications (GSM). It is superimposed in GSM and extends the service life of GSM. GPRS is based on packet forwarding, and channel statistical multiplexing, which raises the rate of data services in prior GSM from 9.6 kbps to 100 kbp/s. Like GSM, however, GPRS adopts Gaussian Minimum Shift Keying (GMSK), so the transmission rate cannot reach 2 Mbit/s required by 3G services. To fully meet the bandwidth requirements of wireless multimedia applications in the future, EDGE provides a transitional solution for evolving from GPRS to 3G. EDGE is a mobile communication technology with an enhanced data rate based on GSM/GPRS and is usually called a 2.75G technology. The technology mainly provides wideband services and can enable the networks using 800 MHz, 900 MHz, 1800 MHz and 1900 MHz to provide some functions of a 3G network.

At present, the theoretical peak data rate of Enhanced General Packet Radio Service (EGPRS) is 473.6 kbps. In an actual network, the rate can reach 100-200 kbps by using four timeslots. When multiple carriers are used, the peak and the average rates may increase in a similar proportion to the number of carriers, for example, when two carriers are used, the theoretical peak rate is close to 1 Mbit/s.

US2006/280142 discloses a method for wireless multi-carrier communications In the method, a TBF may be allocated one or more time slots for one or more carriers.

Among assignment messages in the method for assigning resources in the prior art, the structure of a temporary block flow (TBF) in carrier assignment includes the information of timeslot bitmaps assigned by the TBF, as described below:

```
   < Dual Carrier Multiple Downlink TBF Assignment struct > ::=
   < TIMESLOT_ALLOCATION_C1 : bit (8) >
   { 0 | 1 < TIMESLOT_ALLOCATION_C2 : bit (8) > }
   { 1 < Downlink TBF assignment : < Dual Carrier Downlink TBF assignment struct > > }
 ** 0 ;
```

The above structure is introduced in a 3GPP GERAN contribution GP-062480.

The first timeslot bitmap indicates assigned resource on the first carrier, and the second timeslot bitmap indicates assigned resource on the second carrier. The first timeslot bitmap is always valid, and the second timeslot bitmap is optional. If the flag is set to 1, the second timeslot bitmap is valid; if the flag is set to 0, the second timeslot bitmap is invalid. When the second timeslot bitmap is valid, the timeslot on the second carrier is assigned to the TBF; when the second timeslot bitmap is invalid, the timeslot (the same as the one assigned on the first carrier) used by the second carrier is assigned to the TBF. Therefore, during research, the inventor finds at least the following problem in the prior art: one carrier and two carriers may not be assigned to each TBF through an assignment message. For example, in the case that carriers need be assigned to three TBFs, in which the first TBF need be assigned two carriers, the second TBF need be assigned the carrier of first TBF, and the third TBF need be assigned the carrier of second TBF, the assignment cannot be realized in the prior art.

Embodiments of the present invention provide a method and system for assigning carriers to an MS, so that one carrier and/or multiple carriers can be assigned to one or more than one TBF between the MS and the BS through an assignment message.

The objective of the present invention is realized through the following technical scheme.

A method for assigning carriers to a Mobile Station, MS provided in an embodiment of the present invention includes:

Sending an assignment message indicating carriers assignment to the MS;
wherein the assignment message includes the information of at least one Temporary Block Flow, TBF, that is assigned any one carrier of two carriers and the information of at least one TBF that is assigned the two carriers; and
wherein the assignment message comprises:

```
   fields { 0 | 1 < TIMESLOT_ALLOCATION_C1 : bit (8) > } and { 0 | 1 <
 TIMESLOT_ALLOCATION_C2 : bit (8) > };
```

wherein the value of field < TIMESLOT_ALLOCATION_C1 : bit (8) > is zero or one and the value of field < TIMESLOT_ALLOCATION_C2 : bit (8) > is zero or one.

A Base Station, comprising:
a message constructing unit, configured to construct an assignment message indicating carriers assignment based on any one carrier of two carriers and the two carriers assigned to TBFs; and a sending unit, configured to send the message to an MS; wherein the assignment message comprises:

```
   fields { 0 | 1 < TIMESLOT_ALLOCATION_C1 : bit (8) > } and { 0 | 1 <
 TIMESLOT_ALLOCATION_C2 : bit (8) > };
```

wherein the value of field < TIMESLOT_ALLOCATION_C1 : bit (8) > is zero or one and the value of field < TIMESLOT_ALLOCATION_C2 : bit (8) > is zero or one.

With the method and system for assigning carriers to an MS provided in an embodiment of the present invention, an assignment message can be used to assign one carrier and/or multiple carriers to one or more than one TBF between the MS and the BS, which increases the carrier assignment efficiency and further improves the peak rate and the average rate of the system.

### Brief Description of the Drawings

Figure 1 shows the structure of the system for assigning carriers to an MS in an embodiment of the present invention;
Figure 2 shows the flowchart of the method for assigning carriers to an MS in an embodiment of the present invention: and
Figure 3 shows the flowchart of the method for assigning carriers to an MS in another embodiment of the present invention.

### Detailed Description of the Invention

The embodiments of the present invention provide a method and system for assigning carriers to an MS. The invention is hereinafter described in detail with reference to the embodiments and accompanying drawings.

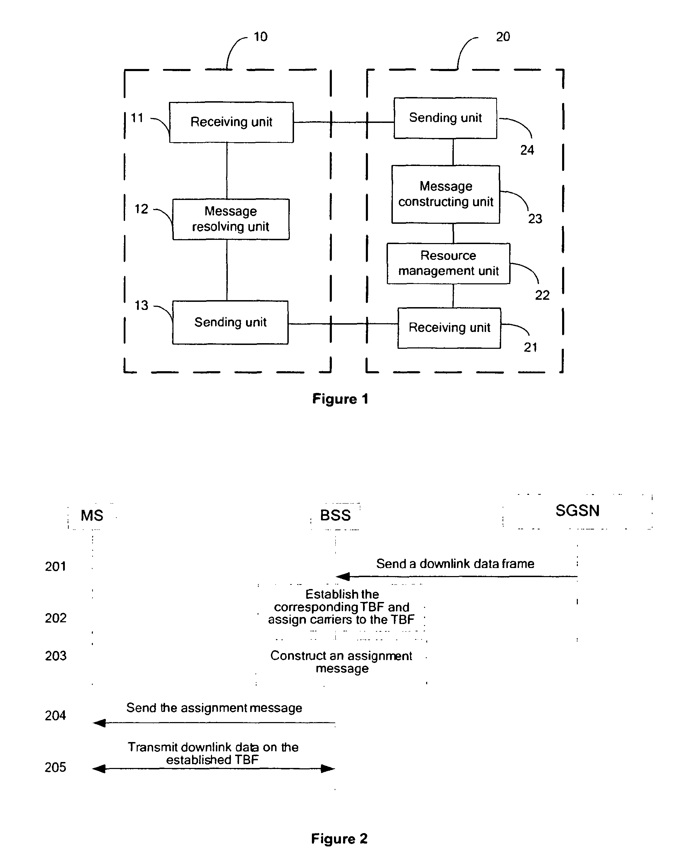

Figure 1 shows the structure of the system for assigning carriers to an MS in a embodiment of the present invention. The system for assigning carriers to an MS includes an MS 10 and a BS 20. The MS 10 includes a receiving unit 11, a message resolving unit 12 and a sending unit 13, and the BS 20 includes a receiving unit 21, a resource management unit 22, a message constructing unit 23 and a sending unit 24.

The receiving unit 11 of the MS 10 is configured to receive an assignment message from the BS and downlink data of the BS; the message resolving unit 12 of the MS 10 is configured to resolve the assignment message to obtain the carriers assigned to each TBF; the sending unit 13 of the MS 10 is configured to send data to the BS 20 on the carriers assigned to each TBF.

The receiving unit 21 of the BS 20 is configured to receive the data transmitted between the BS 20 and the MS 10; the resource management unit 22 of the BS 20 is configured to assign one carrier and/or two carriers to each TBF according to the TBF and the requirement on the transmission rate; the message constructing unit 23 of the BS 20 is configured to construct an assignment message indicating carrier assignment of each TBF according to the carriers assigned to the each TBF; the sending unit 24 of the BS 20 is configured to send the assignment message and other downlink data to the MS 10.

The system for assigning carriers to an MS provided in an embodiment of the present invention effectively increases the carrier assignment efficiency and further improves the peak rate and the average rate of the system.

Figure 2 shows the flowchart of the method for assigning carriers to an MS in an embodiment of the present invention, in which carriers are assigned to TBFs during transmission of downlink data. The flow includes:
Step 201: The serving GPRS support node (SGSN) sends a downlink data frame containing a packet flow identifier (PFI) to the base station subsystem (BSS).

The PFI indicates the packet flow context (PFC), which is the description of the QoS parameter and provided by the SGSN to the BSS and users. The QoS parameter includes the requirement on the data transmission rate.

Step 202: Upon receiving the downlink data frame, the BSS establishes one or more than one TBF corresponding to the downlink data frame and assigns one carrier and/or two carriers to each TBF.

Step 203: The BSS constructs an assignment message indicating carrier assignment of each TBF based on the carriers assigned to the each TBF. The message includes the information of the TBF(s) that is assigned one carrier and/or the information of the TBF(s) that is assigned two carriers.

The downlink assignment message may be constructed in the following two modes:

The format of a downlink assignment message constructed in the first mode includes information of two assigned carriers, the structure of the downlink TBF that is assigned the two carriers, the structure of the downlink TBF that is assigned the first carrier and the structure of the downlink TBF that is assigned the second carrier. Based on the carriers assigned to the TBFs, the information of the TBFs is filled in the structure of the downlink TBF that is assigned the two carriers, the structure of the downlink TBF that is assigned the first carrier, and the structure of the downlink TBF that is assigned the second carrier. If the information of a TBF is filled in the structure of the downlink TBF that is assigned two carriers, the two carriers are assigned to the TBF; if the information of a TBF is filled in the structure of the downlink TBF that is assigned the first carrier, the first carrier is assigned to the TBF; if the information of a TBF is filled in the structure of the downlink TBF that is assigned the second carrier, the second carrier is assigned to the TBF. For example, if a BS assigns the first carrier to the first TBF and the second carrier to the second TBF, the information of the first TBF is filled in the structure of the downlink TBF that is assigned the first carrier and the information of the second TBF is filled in the structure of the downlink TBF that is assigned the second carrier. Therefore, the assignment message includes the information of the TBF that is assigned the first carrier and the information of the TBF that is assigned the second carrier. Another example is: if a BS assigns the first or second carrier to the first TBF, and the first and second carriers to the second TBF, the information of the first TBF is filled in the structure of the downlink TBF that is assigned the first carrier or the structure of the downlink TBF that is assigned the second carrier, and the information of the second TBF is filled in the structure of the downlink TBF that is assigned the two carriers. Therefore, the assignment message includes the information of the TBF that is assigned one carrier and the information of the TBF that is assigned two carriers.

The following is an example of some codes included in the first type of downlink assignment message:

```
   < Multiple TBF Downlink Assignment message content > ::=
    { 0 | { 1 < Dual Carrier Multiple Downlink TBF Assignment : < Dual Carrier Multiple
 Downlink TBF Assignment struct > > } ** 0 }
    { 0 | { 1 < Multiple Downlink TBF Assignment C1 : < Multiple Downlink TBF
 Assignment struct > > } ** 0 }
    { 0 | { 1 < Multiple Downlink TBF Assignment C2: < Multiple Downlink TBF
 Assignment struct > > } ** 0 }
```

The preceding assignment message indicates there is a TBF that is assigned two carriers, a TBF that is assigned the first carrier and a TBF that is assigned the second carrier.

The format of a downlink assignment message constructed in the second mode includes information of two assigned carriers, the structure of the downlink TBF that is assigned the two carriers and other information. The structure of the downlink TBF that is assigned two carriers includes the first timeslot allocation bitmap and the second timeslot allocation bitmap. Based on the carriers assigned to the TBF, the first timeslot allocation bitmap and the second timeslot allocation bitmap are set to valid ones and the information of the TBF is filled in the structure of the TBF that is assigned the two carriers. If the first timeslot allocation bitmap and the second timeslot allocation bitmap are valid, two carriers are assigned to the TBF; if the first timeslot allocation bitmap is valid and the second timeslot bitmap is invalid, the carrier corresponding to the first timeslot allocation bitmap is assigned to the TBF; if the first timeslot allocation bitmap is invalid and the second timeslot bitmap is valid, the carrier corresponding to the second timeslot allocation bitmap is assigned to the TBF.

The following is an example of some codes included in the second type of downlink assignment message:

```
    < Dual Carrier Multiple Downlink TBF Assignment struct > ::=
        {1
            { 0 | 1 < TIMESLOT_ALLOCATION_C1 : bit (8) > }
            { 0 | 1 < TIMESLOT_ALLOCATION_C2 : bit (8) > }
            { 1 < Downlink TBF assignment : < Dual Carrier Downlink TBF assignment
 struct > > } ** 0
    } ** 0
```

If there are other TBFs before the TBF corresponding to the downlink data frame is established, the carrier configuration of the original TBF need be modified. For example, before the TBF corresponding to the downlink data frame is established, if data is transmitted between the BSS and the MS via TBF1 and Carrier-A is assigned to TBF1 and Carrier-B and Carrier-C are assigned to the new TBF2, the Carrier-A assigned to TBF1 need be changed into Carrier-B or Carrier-C because only two carriers are allowed between the MS and the BSS. Therefore, in the assignment message, Carrier-B and Carrier-C need be assigned to TBF2 and Carrier-B or Carrier-C need be assigned to TBF1.

Step 204: The BSS sends the downlink assignment message to the MS.

Step 205: Upon receiving the downlink assignment message, the MS acquires the carriers assigned to TBFs and receives the downlink data from the BSS on the corresponding TBFs.

The method for assigning carriers to an MS provided in a embodiment of the present invention can increase the carrier assignment efficiency and further improve the peak rate and the average rate of the system.

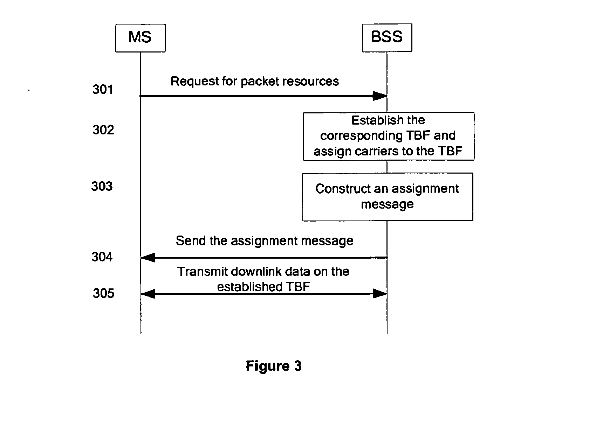

Figure 3 shows the flowchart of the method for assigning carriers to an MS in another embodiment of the present invention in which carriers are assigned to TBFs during transmission of uplink data. The flow includes the following steps:
Step 301: The MS sends a request for packet resources containing PFI to the BSS.
Step 302: Upon receiving the request, the BSS establishes one or more than one TBF corresponding to the packet resource request and assigns one carrier and/or two carriers to the TBF(s).
Step 303: The BSS constructs a message indicating carrier assignment based on the carriers assigned to the TBF(s). The message includes the information of the TBF(s) that is assigned one carrier and the information of the TBF(s) that is assigned two carriers.

An assignment message may be constructed in the following two modes:

The format of an uplink assignment message constructed in the first mode includes information of two assigned carriers, the structure of one or more than one uplink TBF that is assigned the two carriers, the structure of one or more than one uplink TBF that is assigned the first carrier and the structure of one or more than one uplink TBF that is assigned the second carrier. Based on the carriers assigned to TBF(s), the information of the TBF(s) is filled in the structure of the uplink TBF(s) that is assigned the two carriers, the structure of the uplink TBF that is assigned the first carrier, and the structure of the uplink TBF that is assigned the second carrier. If the information of a TBF is filled in the structure of the uplink TBF that is assigned two carriers, the two carriers are assigned to the TBF; if the information of a TBF is filled in the structure of the uplink TBF that is assigned the first carrier, the first carrier is assigned to the TBF; if the information of a TBF is filled in the structure of the uplink TBF that is assigned the second carrier, the second carrier is assigned to the TBF. For example, a BS assigns the first carrier to the first TBF and the second carrier to the second TBF, the information of the first TBF is filled in the structure of the uplink TBF that is assigned the first carrier and the information of the second TBF is filled in the structure of the uplink TBF that is assigned the second carrier. Another example is: if a BS assigns the first carrier and the second carrier to a TBF, the information of the TBF is filled in the structure of the uplink TBF that is assigned the two carriers.

The following is an example of some codes included in the first type of uplink assignment message:

```
   < Multiple TBF Uplink Assignment message content > ::=
    { 0 | { 1 < Dual Carrier Multiple Uplink TBF Assignment : < Dual Carrier Multiple
 Uplink TBF Assignment struct > > } ** 0 }
    { 0 | { 1 < Multiple Uplink TBF Assignment C1 : < Multiple Uplink TBF Assignment
 struct > > } ** 0 }
   { 0 | { 1 < Multiple Uplink TBF Assignment C2: < Multiple Uplink TBF Assignment
 struct > > } ** 0 }
```

The preceding assignment message may indicate that two carriers are assigned to one or more than one TBF, the first carrier is assigned to another TBF or more TBFs and the second carrier is assigned to one or more than one TBF.

The format of an uplink assignment message constructed in the second mode includes information of two assigned carriers, the structure of one or more than one uplink TBF that is assigned the two carriers and other information. The structure of one or more than one uplink TBF that is assigned the two carriers includes the first and the second timeslot allocation bitmaps, both of which are optional. If the first timeslot allocation bitmap and the second timeslot allocation bitmap are valid, two carriers are assigned to the TBF; if the first timeslot allocation bitmap is valid and the second timeslot bitmap is invalid, the carrier corresponding to the first timeslot allocation bitmap is assigned to the TBF; if the first timeslot allocation bitmap is invalid and the second timeslot bitmap is valid, the carrier corresponding to the second timeslot allocation bitmap is assigned to the TBF. Therefore, in the second type of uplink assignment message, either one carrier or two carriers may be assigned to a TBF.

The following is an example of some codes included in the second type of uplink assignment message:

```
   < Dual Carrier Multiple Uplink TBF Assignment struct > ::=
       { 1
           { 0 | 1 < TIMESLOT_ALLOCATION_C1 : bit (8) > }
           { 0 | 1 < TIMESLOT_ALLOCATION_C2 : bit (8) > }
          { 1 < Uplink TBF assignment: < Dual Carrier Uplink TBF assignment struct > > }
 ** 0
    } ** 0
```

If there are other TBFs before the TBF corresponding to a packet resource request is established, the carrier configuration of the original TBF need be modified. For example, before the TBF corresponding to the packet resource request is established, if uplink data is transmitted between the BSS and the MS via TBF1 and Carrier-A is assigned to TBF1 and Carrier-B and Carrier-C are assigned to the new TBF2, the Carrier-A assigned to TBF1 need be changed into Carrier-B or Carrier-C because only two carriers are allowed between the MS and the BSS. Therefore, in the assignment message, Carrier-B and Carrier-C need be assigned to TBF2 and Carrier-B or Carrier-C need be assigned to TBF1.

Step 304: The BSS sends the uplink assignment message to the MS.

Step 305: Upon receiving the uplink assignment message, the MS acquires the carriers assigned to TBFs and sends the uplink data to the BSS on the corresponding TBFs.

The method and system for assigning carriers to an MS may be applied in the scenarios in which the system directs an MS to assign radio resources by sending one of the following messages: Packet Downlink Assignment, Multiple TBF Downlink Assignment, Packet Uplink Ack/Nack, Packet Uplink Assignment, Multiple TBF Uplink Assignment, Packet Timeslot Reconfigured, Multiple TBF Timeslot Reconfigured, PS Handover Command, DTM Handover Command, Packet Assignment, Immediate Assignment, Immediate Assignment Extended and DTM Assignment Command.

The method for assigning carriers to an MS provided in another embodiment of the present invention can effectively increase the carrier assignment efficiency and further improve the peak rate and the average rate of the system.

In addition, the method and system provided in an embodiment of the present invention can also assign one carrier and/or more carriers to an MS. Both the MS and the BS included in the system for assigning carriers to an MS support two or more carriers.

The following describes the construction process of an assignment message in the method for assigning carriers to an MS when one and/or more carriers are assigned to an MS.

The format of the downlink assignment message constructed in the first mode includes the information of multiple assigned carriers, the structure of the downlink TBF that is assigned multiple carriers and the structure of the downlink TBF that is assigned part of carriers. Based on the carriers assigned to the TBFs, the information of the TBFs is filled in the structure of the downlink TBF that is assigned multiple carriers and the structure of the downlink TBF that is assigned part of carriers. If the information of a TBF is filled in the structure of the downlink TBF that is assigned multiple carriers, multiple carriers are assigned to the TBF, as indicated by the assignment message; if the information of a TBF is filled in the structure of the downlink TBF that is assigned part of the carriers, the corresponding part of carriers are assigned to the TBF. Some carriers use a bitmap to indicate which carriers are used. If the information of a position in the bitmap is valid, the corresponding carrier is assigned. The scenario in which part of carriers are assigned also includes the scenario in which only one carrier is assigned. For example, a BS assigns three TBFs to an MS, and three carriers are used to transmit data; all the three carriers are assigned to the first TBF, the first and the second carriers are assigned to the second TBF, and the first and the third carriers are assigned to the third TBF. In this case, the information of the first TBF is filled in the structure of the downlink TBF that is assigned multiple carriers, the information of the second TBF is filled in the structure of the downlink TBF that is assigned the corresponding part of carriers carrying the bitmaps of the first and second carriers, and the information of the third TBF is filled in the structure of the downlink TBF that is assigned the corresponding part of carriers carrying the bitmaps of the first and third carriers. Therefore, the assignment message includes the information of the TBF that is assigned multiple carriers and information of the TBF that is assigned part of carriers.

The following is an example of some codes included in the first type of downlink assignment message:

```
    < Multiple TBF Multi Carrier Downlink Assignment message content > ::=
   { 1 < Carrier Information : <Carrier Information struct>> } ** 0
   { 0 | { 1 < Multi Carrier Multiple Downlink TBF Assignment : < Multi Carrier Multiple
 Downlink TBF Assignment struct > > } ** 0 }
   { 0 | { 1 < Part Carrier Multiple Downlink TBF Assignment : < Part Carrier Bitmap> <
 Multi Carrier Multiple Downlink TBF Assignment struct > > } ** 0 }
```

The downlink assignment message constructed in the second mode shares the same principle as that in the method for assigning carriers to an MS in the two embodiments of the present invention.

With the method and system for assigning carriers to an MS provided in an embodiment of the present invention, an assignment message may be used to assign one carrier and/or multiple carriers to one or more than one TBF between an MS and a BS, which increases the carrier assignment efficiency and further improves the peak rate and the average rate of the system.

## Claims

1. A method for assigning carriers to a Mobile Station, MS, comprising:
sending an assignment message indicating carriers assignment to the MS;
wherein, the assignment message includes the information of at least one Temporary Block Flow, TBF, that is assigned any one carrier of two carriers and the information of at least one TBF that is assigned the two carriers; and
wherein the assignment message comprises:
fields { 0 | 1 < TIMESLOT_ALLOCATION_C1 : bit (8) > } and { 0 | 1 < TIMESLOT_ALLOCATION_C2 : bit (8) > };
wherein the value of field < TIMESLOT_ALLOCATION_C1 : bit (8) > is zero or one and the value of field < TIMESLOT_ALLOCATION_C2 : bit (8) > is zero or one.

2. The method of claim 1, further comprising:
constructing one or multiple TBFs corresponding to downlink data frames and before sending the assignment message to the MS.

3. The method of claim 1, wherein the structure of the assignment message comprises the structure of TBFs that are assigned two carriers and the structure of TBFs that are assigned any one carrier of the two carriers.

4. The method of claim 1, wherein the information of TBFs is filled in the structure of TBFs that are assigned two carriers and the structure of TBFs that are assigned any one carrier of the two carriers based on the carriers assigned to the MS.

5. The method of claim 1, wherein the structure of TBFs that are assigned two carriers comprises two timeslot allocation bitmaps corresponding to two carriers.

6. The method of claim 5, wherein the timeslot allocation bitmaps corresponding to carriers are set to valid ones and the information of TBFs is filled in the structure of TBFs that are assigned two carriers.

7. A Base Station, comprising:
a message constructing unit (23), configured to construct an assignment message indicating carriers assignment based on any one carrier of two carriers and the two carriers assigned to TBFs; and
a sending unit (24), configured to send the assignment message to an MS;
wherein the assignment message comprises:
fields { 0 | 1 < TIMESLOT_ALLOCATION_C1 : bit (8) > } and { 0 | 1 < TIMESLOT_ALLOCATION_C2 : bit (8) > };
wherein the value of field < TIMESLOT_ALLOCATION_C1 : bit (8) > is zero or one and the value of field < TIMESLOT_ALLOCATION_C2 : bit (8) > is zero or one.

8. The Base Station of claim 7, further comprising:
a resource management unit (22), configured to assign any one carrier of two carriers and the two carriers to TBFs.

## Patentansprüche

1. Verfahren für die Zuweisung von Trägern zu einer Mobilstation, MS, das Folgendes umfasst:
Senden einer Zuweisungsnachricht, die eine Trägerzuweisung anzeigt, an die MS;
wobei die Zuweisungsnachricht die Informationen mindestens eines Temporary Block Flow, TBF, enthält, der einem beliebigen Träger von zwei Trägern zugewiesen ist, und die Informationen mindestens eines TBF, der den zwei Trägern zugewiesen ist; und
wobei die Zuweisungsnachricht Folgendes umfasst:
Felder { 0 | 1 < TIMESLOT_ALLOCATION_C1 : bit (8) > } und { 0 | 1 < TIMESLOT_ALLOCATION_C2 : bit (8) > };
wobei der Wert des Feldes < TIMESLOT_ALLOCATION_C1 : bit (8) > null oder eins ist und der Wert des Feldes < TIMESLOT_ALLOCATION_C2 : bit (8) > null oder eins ist.

2. Verfahren nach Anspruch 1, das weiterhin Folgendes umfasst:
Konstruieren einer oder mehrerer TBFs entsprechend Downlink-Datenrahmen und vor dem Senden der Zuweisungsnachricht an die MS.

3. Verfahren nach Anspruch 1, wobei die Struktur der Zuweisungsnachricht die Struktur von TBFs umfasst, die zwei Trägern zugewiesen sind, und die Struktur von TBFs, die einem beliebigen Träger der zwei Träger zugewiesen sind.

4. Verfahren nach Anspruch 1, wobei die Informationen von TBFs in die Struktur von TBFs eingefüllt werden, die zwei Trägern zugewiesen sind, und die Struktur von TBFs, die einem beliebigen Träger der zwei Träger zugewiesen sind, auf der Basis der der MS zugewiesenen Träger.

5. Verfahren nach Anspruch 1, wobei die Struktur von TBFs, die zwei Trägern zugewiesen sind, zwei zwei Trägern entsprechende Zeitschlitzzuteilungsbitmaps umfasst.

6. Verfahren nach Anspruch 5, wobei die Trägern entsprechenden Zeitschlitzzuteilungsbitmaps auf gültige gesetzt werden und die Informationen von TBFs in die Struktur von TBFs gefüllt werden, denen zwei Träger zugewiesen sind.

7. Basisstation, die Folgendes umfasst:
eine Nachrichtenkonstruiereinheit (23), konfiguriert zum Konstruieren einer Zuweisungsnachricht, die eine Trägerzuweisung angibt, auf der Basis eines beliebigen Trägers von zwei Trägern und der zwei TBFs zugewiesenen Träger; und
eine Sendeeinheit (24), konfiguriert zum Senden der Zuweisungsnachricht an eine MS;
wobei die Zuweisungsnachricht Folgendes umfasst:
Felder { 0 | 1 < TIMESLOT_ALLOCATION_C1 : bit (8) > } und { 0 | 1 < TIMESLOT_ALLOCATION_C2 : bit (8) > };
wobei der Wert des Feldes < TIMESLOT_ALLOCATION_C1 : bit (8) > null oder eins ist und der Wert des Feldes < TIMESLOT_ALLOCATION_C2 : bit (8) > null oder eins ist.

8. Basisstation nach Anspruch 7, die weiterhin Folgendes umfasst:
eine Ressourcenmanagementeinheit (22), konfiguriert zum Zuweisen eines beliebigen Trägers von zwei Trägern und der zwei Träger an TBFs.

## Revendications

1. Procédé permettant d'assigner des porteuses à une station mobile, MS, comprenant :
l'envoi d'un message d'assignation indiquant l'assignation de porteuses à la station mobile MS,
dans lequel le message d'assignation inclut les informations d'au moins un flux par blocs temporaire, TBF, qui se voit assigner une porteuse quelconque parmi deux porteuses et les informations d'au moins un flux TBF qui se voit assigner les deux porteuses, et
dans lequel le message d'assignation comprend :
les champs { 0 | 1 < TIMESLOT_ALLOCATION_C1 : bit (8) > } et { 0 | 1 < TIMESLOT_ALLOCATION_C2 : bit (8) > },
dans lequel la valeur du champ < TIMESLOT_ALLOCATION_C1 : bit (8) > est zéro ou un, et la valeur du champ < TIMESLOT_ALLOCATION_C2 : bit (8) > est zéro ou un.

2. Procédé selon la revendication 1, comprenant en outre :
la constitution d'un ou de multiples flux TBF correspondant à des trames de données de liaison descendante et avant l'envoi du message d'assignation à la station mobile MS.

3. Procédé selon la revendication 1, dans lequel la structure du message d'assignation comprend la structure des flux TBF qui se voient assigner deux porteuses et la structure des flux TBF qui se voient assigner une porteuse quelconque parmi les deux porteuses.

4. Procédé selon la revendication 1, dans lequel les informations des flux TBF sont remplies dans la structure des flux TBF qui se voient assigner deux porteuses et dans la structure des flux TBF qui se voient assigner une porteuse quelconque parmi les deux porteuses sur la base des porteuses assignées à la station mobile MS.

5. Procédé selon la revendication 1, dans lequel la structure des flux TBF qui se voient assigner deux porteuses comprend deux mappes de bits d'allocation de tranches de temps correspondant aux deux porteuses.

6. Procédé selon la revendication 5, dans lequel les mappes de bits d'allocation de tranches de temps correspondant à des porteuses sont établies pour des porteuses valides et les informations de flux TBF sont remplies dans la structure des flux TBF qui se voient assigner deux porteuses.

7. Station de base comprenant :
une unité de constitution de messages (23), configurée pour constituer un message d'assignation indiquant une assignation de porteuses sur la base d'une porteuse quelconque parmi deux porteuses et des deux porteuses assignées à des flux TBF, et
une unité d'envoi (24), configurée pour envoyer le message d'assignation à une station mobile MS,
dans laquelle le message d'assignation comprend :
les champs { 0 | 1 < TIMESLOT_ALLOCATION_C1 : bit (8) > } et { 0 | 1 < TIMESLOT_ALLOCATION_C2 : bit (8) > },
dans laquelle la valeur du champ < TIMESLOT_ALLOCATION_C1 : bit (8) > est zéro ou un, et la valeur du champ < TIMESLOT_ALLOCATION_C2 : bit (8) > est zéro ou un.

8. Station de base selon la revendication 7, comprenant en outre :
une unité de gestion de ressources (22), configurée pour assigner une porteuse quelconque parmi deux porteuses ainsi que les deux porteuses à des flux TBF.
